# EUROPEAN PATENT APPLICATION

(11) **EP 4 618 580 A1**
(43) Date of publication of application: **17.09.2025**
(21) Application number: 25163123.0
(22) Date of filing: 11.03.2025
(51) Int. Cl.: H04N 23/90

(54) **SYNCHRONOUS CAMERA APPARATUS INCLUDING A PLURALITY OF HIGH-SPEED CAMERAS**

(30) Priority: 12.03.2024 JP 2024038498
(71) Applicant: Nac Image Technology Inc., Tokyo 107-0061 (JP)
(72) Inventor: HAYASHI, Mitsuo, Tsuzuki-ku Yokohama-shi (JP); SATO, Taku, Tsuzuki-ku Yokohama-shi (JP)
(74) Representative: Kronthaler, Schmidt & Coll.

(57) **Abstract**

Respective image frames of a plurality of conventional high-speed cameras have been difficult to synchronize with one another. A synchronous camera apparatus including a plurality of high-speed cameras according to the present invention includes a plurality of high-speed cameras each including an imager unit that sequentially images a target video image at a set exposure timing, a video recording memory, a video recording unit that video-records a predetermined image imaged by the imager unit as an image frame of digital data in the video recording memory by input of a trigger signal, and a system control unit that has a timer and performs various types of calculations, and synchronization signal setting means for setting a synchronization signal in each of the high-speed cameras and transmitting the set synchronization signal to each of the high-speed cameras. The synchronization signal is a trigger time. The synchronization signal is a sequence number matching time and a trigger sequence number.

## Description

### TECHNICAL FIELD OF THE INVENTION

The present invention relates to a synchronous camera apparatus including a plurality of digital high-speed cameras for synchronous shooting with the plurality of high-speed cameras.

### BACKGROUND OF THE INVENTION

### Description of Configuration of General Digital High-Speed Camera

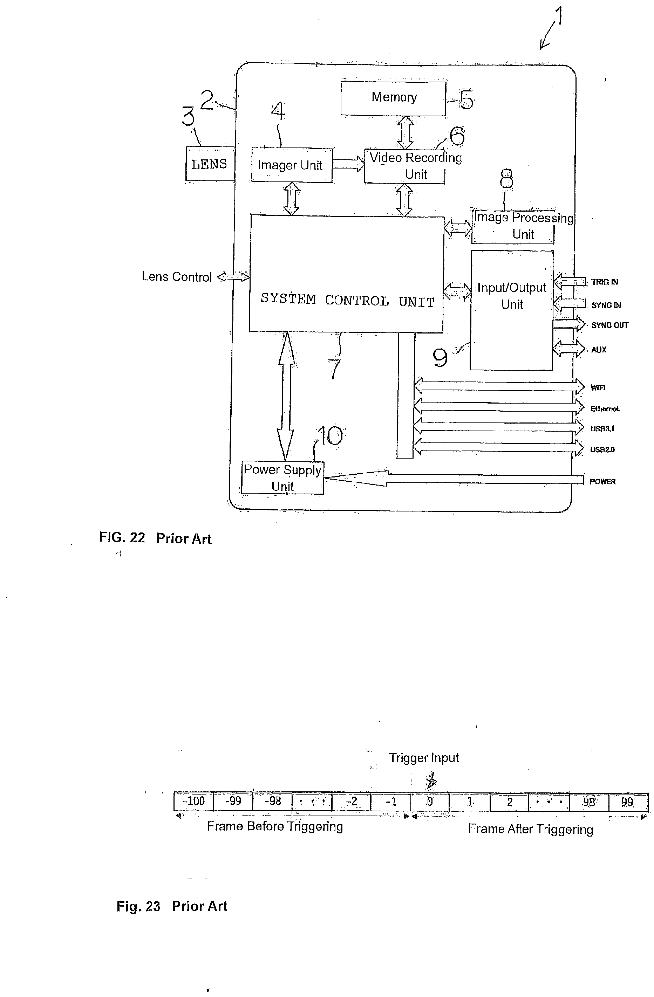

FIG. 22 illustrates a configuration of a general digital high-speed camera 1. The digital high-speed camera 1 includes a camera body 2, a photographic lens 3, and the like. Some cameras have no photographic lens 3 but use other optical systems.

The camera body 2 includes an imager unit 4 composed of, for example, an image sensor that images a target video image by sequentially performing an exposure at a set exposure timing (cycle), a video recording memory 5 composed of, for example, a DRAM formed to perform video recording in a ring buffer shape, a video recording unit 6 that sequentially video-records the video image imaged by the imager unit 4 as an image frame of digital data in the video-recording memory 5 and stops, when a predetermined number of image frames are video-recorded, the video recording in the video recording memory 5 by input of a trigger signal described below to stop overwriting, to leave video images as the predetermined image frame in the video recording memory 5, a system control unit 7 that includes, for example, a timer for managing a time, a CPU, and a RAM and a ROM including software, which are related to its operation, and performs or causes them to perform various types of calculation and storage, an image processing unit 8 composed of, for example, a DSP and a GPU, an input/output unit 9 that inputs and outputs an external signal, and a power supply unit 10 that supplies power to the camera body 2.

In FIG. 22, the imager unit 4, the video recording unit 6, the image processing unit 8, the input/output unit 9, the power supply unit 10, and the like are described as being separate from the system control unit 7. However, some or all of the imager unit 4, the video recording unit 6, the image processing unit 8, the input/output unit 9, the power supply unit 10, and the like may constitute a part of the system control unit 7.

### Description of Method for Video Recording in Video Recording Memory 5 by Video Recording Unit 6

In the conventional digital high-speed camera 1 that performs recording in a memory, the video recording memory 5 having a ring buffer shape is formed such that image frames are sequentially written from the beginning of its storage region and are sequentially written by overwriting from the beginning of the storage region immediately when written to the end thereof, and the overwriting is repeated until video recording is stopped.

For example, the video recording unit 6 writes an image imaged and converted into digital data by sequentially performing an exposure at a set predetermined exposure timing (cycle) in the video recording memory 5 in a ring buffer shape so that the image frame is sequentially recorded therein in the cycle.

The video recording unit 6 is provided with a video-recorded image frame number setting unit that previously sets the number of image frames, respective video records of which are left in the video recording memory 5 by stopping video recording to stop overwriting by trigger signal input.

The video recording unit 6 writes, from the time when a trigger signal is inputted into the video recording unit 6, a previously set predetermined number of images, and then stops the writing, to stop overwriting into the video recording memory 5 using the video-recorded image frame number setting unit. As a result, respective records of required numbers of image frames before and after the time of the trigger signal input are left.

For example, there is a general high-speed shooting function (hereinafter referred to as normal recording) for recording the respective previously set predetermined numbers of written images before and after the time of the trigger signal input (e.g., 100 image frames before triggering and 100 image frames after triggering (including a trigger frame at the time of the trigger input in this example)) as consecutive image frames in the video recording memory 5, as illustrated in FIG. 23.

The trigger frame may be included in either one of respective representations before and after triggering. Alternatively, the trigger frame may be included in neither one of the respective representations so that the trigger frame is used as a reference to separate the representations.

The video-recorded image frame number setting unit may set the previously set predetermined number of image frames before or after the time of the trigger signal input, excluding the trigger frame, to zero.

### Description of CPU Trigger Signal

A TRIG IN connector of the input/output unit 9 in the camera 1 and an electrical signal input unit, which has an appropriate input method (signal polarity, etc.) and can ignore a delay of an electrical signal, in a trigger generator that generates a trigger signal using the electrical signal input unit are directly connected to each other via an electrical signal cable without an asynchronous electronic device being interposed therebetween. There is a method for inputting the trigger signal generated by the trigger generator into the video recording unit 6 via the electrical signal cable. However, it is also possible to input a trigger (hereinafter referred to as a "CPU trigger") generated by the system control unit 7 in the camera 1 into the video recording unit 6.

Examples of the electrical signal cable include a BNC (Bayonet Neill Concelman) cable and a coaxial cable.

According to a CPU trigger method, the camera 1 and a communication electronic device in the trigger generator are connected to each other in a communication format based on, for example, a TCP/IP (including UDP; the same applies hereinafter) protocol via wireless LAN (Wi-Fi) or wired LAN (Ethernet). The camera 1, which has received the trigger signal from the trigger generator, generates the CPU trigger and inputs the generated CPU trigger into the video recording unit 6. Accordingly, the CPU trigger method is used as a simple trigger signal input method.

Examples of the communication electronic device in the trigger generator include a trigger generator that generates a trigger signal by an electrical signal input unit having an appropriate input method (signal polarity, etc.) such as contact input (a contact switch) or insulation input (a current loop using a photocoupler) and capable of ignoring a delay of an electrical signal and a trigger generator that generates a trigger signal using a control device such as a remote controller.

### Description of Synchronous Shooting with Cameras

When synchronous shooting is performed with a plurality of digital high-speed cameras, respective time axes of the cameras need to be accurately aligned with one another. Accordingly, for example, an asynchronous electronic device needs to be interposed as little as possible between the cameras. Accordingly, the cameras need to be connected to each other via an electrical signal cable represented by a BNC cable and a coaxial cable such that an asynchronous electronic device is not interposed therebetween as communication means.

That is, the cameras are connected to each other via the electrical signal cable such that an asynchronous electronic device for communication is not interposed therebetween. For example, an asynchronous electronic device for conversion into a communication format based on a TCP/IP (also including UDP) protocol is not interposed between the cameras. This makes it possible to reduce a transmission delay caused by interposing a plurality of asynchronous electronic devices among the cameras to align the respective time axes of the cameras.

The cameras respectively perform exposures at predetermined exposure timings (cycles) to match the time axes, thereby synchronizing respective image frames of the cameras with one another. The respective image frames to which a trigger signal is inputted (hereinafter referred to as trigger frames) of the cameras are made the same, thereby enabling synchronous shooting with the cameras.

Examples of a case where the respective image frames of the cameras are synchronized with one another include a case where the exposures are respectively performed at the predetermined exposure timings to match the synchronized time axes of the cameras, respective boundaries of the image frames (i.e., respective start times or end times of the image frames) are set with an exposure start time or an exposure end time of the exposures as a reference, for example, and the boundaries of the image frames (i.e., the start times or end times of the image frames) are made to match one another.

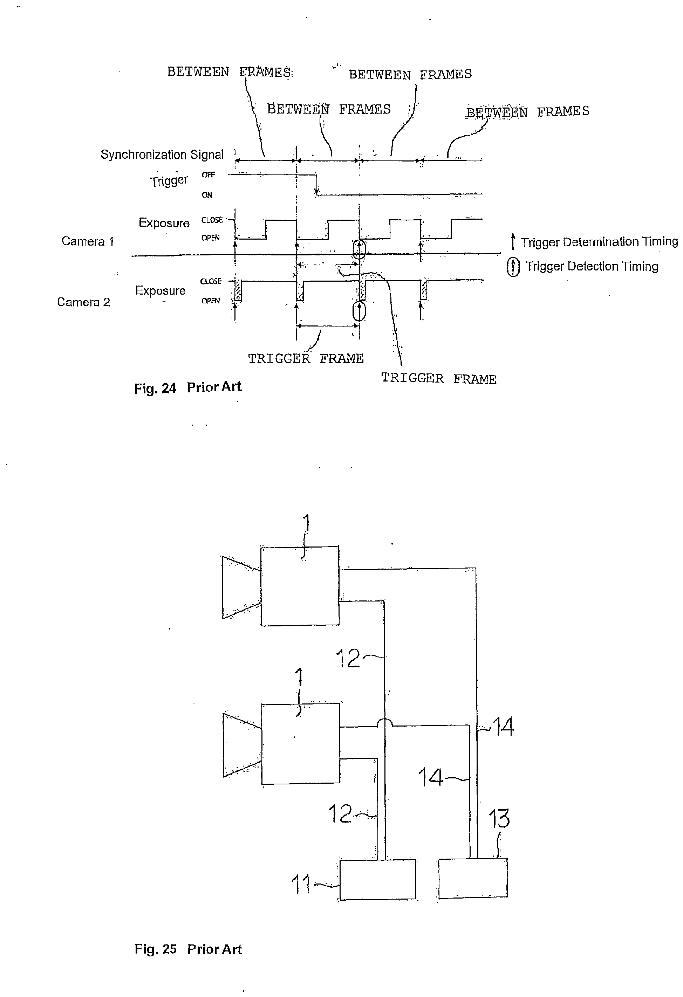

As an example of a method for making the trigger frames the same, it is determined whether or not a trigger signal has been present at an end time of each of the synchronized image frames of the cameras, as illustrated in FIG. 24. When it is detected that the trigger signal has been present, the image frame is determined to be a trigger frame at the time when the trigger signal has been present. This makes it possible to make the respective trigger frames of the cameras match one another, enabling simultaneous shooting with the plurality of cameras.

For example, a general high-speed video camera is disclosed in Japanese Patent No. 4657379.

### SUMMARY OF THE INVENTION

### Description of Reason why Trigger signal is Difficult to Simultaneously Input into Video Recording Units 6

In order to perform synchronous shooting with a plurality of digital high-speed cameras 1 using the above-described CPU trigger, the CPU trigger needs to be simultaneously inputted into the respective video recording units 6 in the cameras 1. However, the system control unit 7 including the CPU is not synchronized with respective image frames of the cameras 1. Therefore, it cannot be ensured that the CPU trigger is inputted into the video recording units 6 in the cameras 1 at the same timing. Accordingly, respective trigger frames of the cameras 1 cannot be made to match one another.

In order to make the respective trigger frames of the plurality of cameras 1 match one another, a trigger signal needs to be simultaneously inputted into the cameras 1 from the outside. However, when each of the cameras 1 and the trigger generator are connected to each other using a communication format based on a TCP/IP protocol via, for example, wireless LAN (Wi-Fi) or wired LAN (Ethernet), it is not ensured that the respective video recording units 6 in the cameras 1 simultaneously receive a signal.

In the above-described case, a plurality of asynchronous electronic devices for conversion into a communication format based on, for example, a TCP/IP (also including UDP) protocol for communication are interposed between each of the cameras 1 and the trigger generator. Accordingly, a delay cannot be ignored, thereby making it difficult to synchronize the cameras 1 with one another.

### Description of Method for Simultaneously Inputting Trigger Signal into Video Recording Units 6

Accordingly, in order for the cameras 1 to simultaneously receive a signal, an electrical signal cable such as a BNC cable or a coaxial cable must be wired between each of the cameras 1 and the trigger generator such that an electronic device or the like for conversion into, for example, a communication format based on a TCP/IP protocol for communication is interposed therebetween as little as possible.

In order to synchronize the respective time axes of the plurality of cameras 1, as described above, the cameras 1 need to be connected to one another using a synchronization signal. Accordingly, an electrical signal cable for time axis synchronization needs to be wired.

### Description of Disadvantages in Case of Connection via Cable

Accordingly, for example, each of cameras 1 and a trigger generator 11, which generates a trigger signal using the above-described electrical signal input unit, need to be connected to each other via an electrical signal cable 12 for a trigger signal, and each of the cameras 1 and a time signal transmission device 13 need to be connected to each other via an electrical signal cable 14 for a time synchronization signal, as illustrated in FIG. 25. This results in a complicated cable wiring.

When a physical wiring such as a cable is used for a connection between cameras 1 or a connection between each of the cameras 1 and a synchronization system, an installation location and a movement range of the camera 1 are restricted, thereby narrowing an operable application.

The present invention is directed to eliminating the above-described disadvantages.

A synchronous camera apparatus including a plurality of high-speed cameras according to the present invention includes a plurality of high-speed cameras each including an imager unit that images a target video image by sequentially performing an exposure at a set exposure timing, a video recording memory, a video recording unit that video-records a predetermined image imaged by the imager unit as a predetermined image frame of digital data in the video recording memory by input of a trigger signal, and a system control unit that has a timer and performs various types of calculations, and synchronization signal setting means for setting a synchronization signal in each of the high-speed cameras and transmitting the set synchronization signal to each of the high-speed cameras, in which the system control unit in each of the high-speed cameras includes camera synchronization means, and the camera synchronization means includes current time generation means for synchronizing, on the basis of a current time signal transmitted at a regular timing from the outside, the timer with the current time signal to generate a current time and determining the exposure timing on the basis of the current time, synchronization signal reception means for receiving the synchronization signal from the synchronization signal setting means, and frame association means for associating the synchronization signal received by the synchronization signal reception means with the predetermined image frame sequentially video-recorded.

The synchronization signal setting means for setting a synchronization signal in each of the high-speed cameras and transmitting the set synchronization signal to each of the high-speed cameras is trigger time setting means for setting a trigger time at which a trigger signal is transmitted in the video recording unit in each of the high-speed cameras and transmitting the set trigger time to each of the high-speed cameras, the camera synchronization means is trigger frame synchronization means, the synchronization signal reception means for receiving the synchronization signal from the synchronization signal setting means is trigger time reception means for receiving the trigger time from the trigger time setting means, and the frame association means for associating the synchronization signal received by the synchronization signal reception means with the predetermined image frame sequentially video-recorded is means for associating the trigger time received by the trigger time reception means with the predetermined image frame sequentially recorded.

The frame association means in each of the high-speed cameras is means for determining whether or not a current time of the image frame has reached the trigger time acquired from the trigger time reception means, setting, when it is determined that the current time has reached the trigger time, the image frame as an image frame at the trigger time, transmitting the trigger signal to the video recording unit and setting a predetermined image frame based on the image frame, and making the predetermined image frames match one another in the high-speed cameras, thereby synchronizing the high-speed cameras with one another.

Making the respective predetermined image frames based on image frames match one another in the high-speed cameras, to synchronize the high-speed cameras with one another means making the respective image frames at the trigger times of the high-speed cameras match one another as predetermined image frames.

Making the respective predetermined image frames based on the image frames match one another in the high-speed cameras, to synchronize the high-speed cameras with one another means providing the frame association means in each of the high-speed cameras with an image frame setting unit that sets an image frame having a predetermined relationship from the image frame at the trigger time of the high-speed camera, to make the predetermined image frames respectively set by the image frame setting units in the high-speed cameras match one another.

The predetermined image frame is an event frame of an image frame at a time when the trigger signal is inputted into each of the high-speed cameras.

The trigger time is set to a time later than a time when the trigger time setting means receives the trigger signal.

The trigger time is set to a time of an image frame at a time when video recording is finished.

The trigger time is set to a time of an image frame at a time when video recording is finished, and an image frame setting unit provided in the frame association means in each of the high-speed cameras calculates an event frame as an image frame at a time when a trigger signal is inputted from an image frame at the trigger time, and makes the respective event frames match one another in the high-speed cameras, thereby synchronizing the high-speed cameras with one another.

The trigger times respectively inputted into the high-speed cameras match one another.

The trigger time of each of the cameras is set to correspond to an exposure timing set for the camera or/and a number of image frames, respective video records of which are left in a video recording memory.

The trigger time is set to a time later than a start time and earlier than an end time of the image frame, in which the trigger time is set, of each of the cameras.

In the high-speed cameras, respective set video recording speeds of which differ from one another and respective image frames of which are synchronized with one another by making start times of the image frames match one another, the trigger time is further set to be a time obtained by adding a time period longer than zero and shorter than a cycle (one divided by the video recording speed) of the high-speed camera having the highest video recording speed to the start time of the image frame of the high-speed camera having the lowest video recording speed in which the trigger time is set.

In the high-speed cameras, respective set video recording speeds of which differ from one another and respective image frames of which are synchronized with one another by making end times of the image frames match one another, the trigger time is further set to be a time obtained by subtracting a time period longer than zero and shorter than a cycle (one divided by the video recording speed) of the high-speed camera having the highest video recording speed from the end time of the image frame of the high-speed camera having the lowest video recording speed in which the trigger time is set.

The current time signals are respectively acquired from wireless time synchronization devices connected to the high-speed cameras via electrical signal cables without electronic devices being interposed thereamong and configured to be wirelessly synchronized with one another.

The trigger time reception means receives the trigger time by communication means in a communication format based on a TCP/IP protocol.

The communication means in the communication format based on the TCP/IP protocol is data communication according to a Wi-Fi standard.

The communication means in the communication format based on the TCP/IP protocol is data communication according to an Ethernet standard.

The synchronous camera apparatus further includes means for transmitting the trigger time received by the trigger time reception means in at least one of the plurality of high-speed cameras to a device that transmits the trigger time to the trigger time reception means in the other high-speed cameras.

The synchronous camera apparatus further includes means for transmitting the trigger time received by the trigger time reception means in at least one of the plurality of high-speed cameras to the trigger time reception means in the other high-speed cameras by wire or wirelessly.

The trigger time setting means is provided in a device separate from the high-speed cameras and transmits the trigger time generated by the trigger time setting means to each of the high-speed cameras by wire or wirelessly.

The trigger time setting means is provided in at least one of the plurality of high-speed cameras, the trigger time generated by the trigger time setting means in the at least one high-speed camera is notified to the trigger time reception means in the at least one high-speed camera, and is transmitted to the trigger time reception means in the other high-speed cameras.

The trigger time generated by the trigger time setting means in the at least one high-speed camera is generated on the basis of a trigger signal inputted into at least one of the high-speed cameras.

The trigger signal is generated by a trigger generator, and the generated trigger signal is transmitted to the trigger time setting means by communication means in a communication format based on a TCP/IP protocol provided in the trigger generator.

The trigger signal is generated by an electrical signal input unit in a trigger generator, and the generated trigger signal is transmitted from the electrical signal input unit to the trigger time setting means via an electrical signal cable without an electronic device being interposed therebetween.

The system control unit in each of the high-speed cameras includes a sequence number setting unit that sequentially numbers an image frame sequentially recorded in the video recording memory at a set predetermined exposure timing, the synchronization signal setting means for setting a synchronization signal in each of the high-speed cameras and transmitting the set synchronization signal to each of the high-speed cameras includes sequence number matching time setting means for setting (generating) a sequence number matching time for setting a sequence number of each of the high-speed cameras to a predetermined number and transmitting the sequence number matching time to each of the required high-speed cameras, and trigger sequence number transmission means for generating and transmitting a trigger sequence number corresponding to an image frame to which a trigger signal is to be transmitted, the camera synchronization means is sequence number synchronization means, the synchronization signal reception means for receiving the synchronization signal from the synchronization signal setting means includes sequence number matching time reception means for receiving the sequence number matching time from the sequence number matching time setting means, and trigger sequence number reception means for receiving the trigger sequence number from the trigger sequence number transmission means, and the frame association means for associating the synchronization signal received by the synchronization signal reception means with the predetermined image frame sequentially video-recorded includes frame association means for associating a synchronization signal including the sequence number matching time received by the sequence number matching time reception means and the trigger sequence number received by the trigger sequence number reception means with a predetermined image frame imaged and video-recorded under an exposure by exposure signal generation means.

The frame association means in each of the high-speed cameras is means for determining whether or not the current time generated by the current time generation means has reached the sequence number matching time acquired from the sequence number matching time reception means, setting, when it is determined that the current time has reached the sequence number matching time, the sequence number of each of the high-speed cameras to a predetermined value using the sequence number matching unit, to make the sequence numbers of the high-speed cameras match one another, setting, when the sequence number of each of the high-speed cameras reaches the trigger sequence number received by the trigger sequence number reception means, an image frame in the case as an image frame in the trigger sequence number, transmitting the trigger signal to the video recording unit, and making the image frames in the trigger sequence numbers of the high-speed cameras match one another, thereby synchronizing the high-speed cameras with one another.

When the respective exposure timings of the high-speed cameras differ from one another, the high-speed cameras are respectively provided with sequence number correction units that correct the sequence numbers of the high-speed cameras to be the same at the same time.

According to the present invention, even if respective input timings of an external signal into cameras differ from one another, the same trigger time information, sequence number matching time, and the like are inputted into the cameras, thereby making it possible to make respective trigger frames of the cameras match one another. This eliminates the need for a cable wiring of a trigger signal or the like to each of the cameras.

When time synchronization of a plurality of cameras is unwired in combination with a conventional general-purpose wireless time synchronization device, a combination of a CPU trigger or the like based on time information and the wireless time synchronization device completely eliminates a physical wiring such as a connection among the plurality of cameras and a connection between each of the cameras and a synchronization system, thereby making it possible to freely move the cameras.

### BRIEF DESCRIPTIONS OF THE DRAWINGS

FIG. 1 is an explanatory configuration diagram of a synchronous camera apparatus including a plurality of high-speed cameras according to the present invention;
FIG. 2 is an explanatory diagram illustrating high-speed shooting for generating a 1 Hz signal from a time signal and equally dividing the 1 Hz signal by a phase locked loop in the present invention;
FIG. 3 is an explanatory configuration diagram of high-speed cameras according to the present invention;
FIG. 4 is an explanatory diagram of time synchronization of high-speed cameras according to the present invention;
FIG. 5 is an explanatory diagram of a method for connecting trigger time setting means to high-speed cameras according to the present invention;
FIG. 6 is an explanatory diagram of another method for connecting trigger time setting means to high-speed cameras according to the present invention;
FIG. 7 is an explanatory diagram of still another method for connecting trigger time setting means to high-speed cameras according to the present invention;
FIG. 8 is an explanatory diagram of a further method for connecting a trigger time setting means to high-speed cameras according to the present invention;
FIG. 9 is an explanatory diagram of a trigger time setting method according to the present invention;
FIG. 10 is an explanatory diagram of a trigger time setting method 1 according to the present invention;
FIG. 11 is an explanatory diagram of a trigger time setting method 2 according to the present invention;
FIG. 12 is another explanatory diagram of the trigger time setting method 2 according to the present invention;
FIG. 13 is an explanatory diagram of a trigger time setting method 3 according to the present invention;
FIG. 14 is an explanatory diagram of another example of the trigger time setting method 3 according to the present invention;
FIG. 15 is an explanatory diagram of another example of a trigger time setting method according to the present invention;
FIG. 16 is an explanatory diagram of still another example of the trigger time setting method according to the present invention;
FIG. 17 is a diagram illustrating comparison between respective flows of a conventional method and a new method according to the present invention;
FIG. 18 is an explanatory diagram of a method for synchronization using sequence numbers according to a second embodiment of the present invention;
FIG. 19 is an explanatory diagram of a method for synchronization using sequence numbers according to the second embodiment of the present invention;
FIG. 20 is an explanatory diagram of a method for synchronization using sequence numbers according to the second embodiment of the present invention;
FIG. 21 is an explanatory diagram of a method for synchronization using sequence numbers according to the second embodiment of the present invention;
FIG. 22 is an explanatory configuration diagram of a conventional high-speed camera;
FIG. 23 is an explanatory diagram illustrating video recording of 100 image frames before trigging and 100 image frames after triggering (including a trigger frame) by trigger input;
FIG. 24 is an explanatory diagram illustrating matching of respective image frames in which a camera 1 and a camera 2 are synchronized with each other by trigger input; and
FIG. 25 is an explanatory configuration diagram of a conventional high-speed camera.

### DESCRIPTIONS OF THE PREFERRED EMBODIMENTS

Preferred embodiments of a high-speed camera according to the present invention will be described below with reference to the drawings. The high-speed camera according to the present invention is not limited to the following description, but can be appropriately changed without departing from the spirit and scope of the present invention.

The respective meanings of "simultaneous" and "synchronous" used in the following are not strictly "simultaneous" and "synchronous", but are each a concept including an error within a range that meets the spirit and scope of the present invention and does not interfere with synchronization of image frames.

The same units as those described in the conventional example are respectively denoted by the same reference numerals, and descriptions thereof are omitted.

### First Embodiment

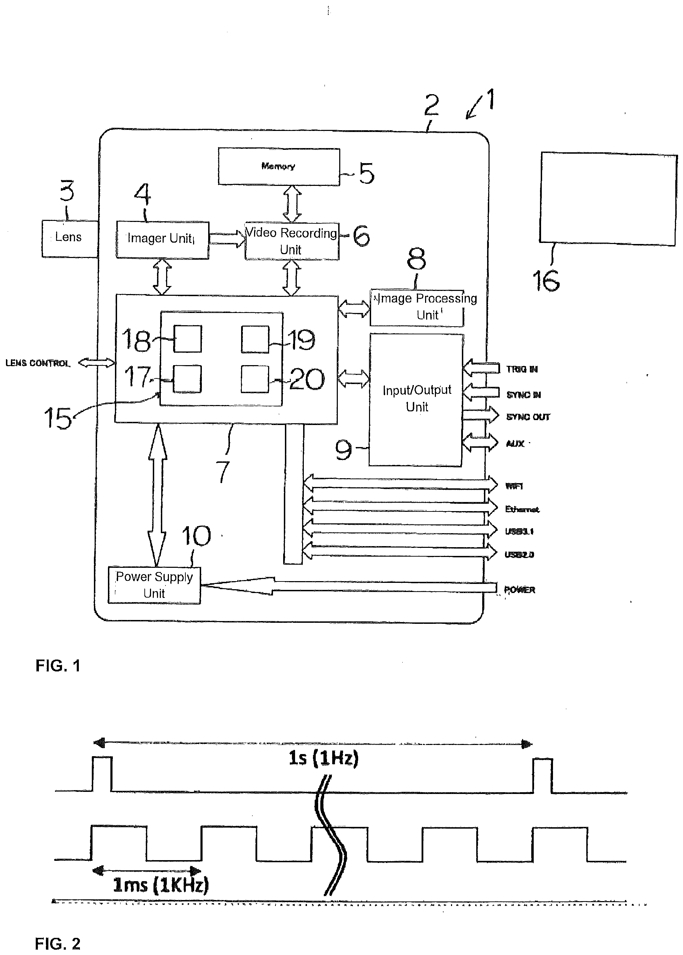

FIG. 1 illustrates a configuration of a synchronous camera apparatus according to an embodiment of the present invention.

### Description of Overall Configuration of Present Invention

In the synchronous camera apparatus according to the present invention, camera synchronization means is provided in a system control unit 7 in each of the conventional high-speed cameras, and synchronization signal setting means for setting (generating) a synchronization signal and transmitting the synchronization signal to each of the required high-speed cameras is provided in a separate device such as a tablet different from each of the high-speed cameras or one camera 1 (parent camera 1a), as illustrated in FIG. 1.

There may be provided a plurality of cameras 1 (parent cameras 1).

In the first embodiment of the present invention, the camera synchronization means is composed of trigger frame synchronization means 15, and the synchronization signal setting means for setting (generating) the synchronization signal and transmitting the synchronization signal to each of the required high-speed cameras 1 is composed of trigger time setting means 16 for setting (generating) a trigger time at which a trigger signal is transmitted to each of the high-speed cameras 1 and transmitting the trigger time to each of the required high-speed cameras 1.

That is, in the first embodiment of the present invention, respective current times of timers of the high-speed cameras 1 are first synchronized with one another, and respective time axes of the cameras 1 are aligned with one another. The cameras 1 respectively perform exposures at predetermined timings (cycles) to match the time axes, thereby synchronizing respective image frames of the cameras 1 with one another. The trigger time setting means 16 transmits the same trigger time to the cameras 1, and transmits, when each of the cameras 1 reaches the trigger time, the trigger signal to a video recording unit 6 in the camera 1, to make predetermined image frames of the cameras 1 to match one another, thereby synchronizing the cameras 1 with one another.

The trigger frame synchronization means 15 includes current time generation means 17 for synchronizing a timer of the system control unit 7 with a highly accurate current time signal (time code) transmitted at a regular low-resolution timing from outside a time signal transmission device 13 other than each of the high-speed cameras 1 and further dividing a predetermined time period at equal intervals on the basis of the current time signal, to generate a high-resolution current time, exposure signal generation means 18 for generating an exposure signal for imaging an image according to an exposure timing (cycle) set on the basis of the current time obtained by the division at equal intervals by the current time generation means 17, trigger time reception means 19 for receiving the trigger time, and frame association means 20 for associating a synchronization signal at the trigger time received by the trigger time reception means 19 with a predetermined image frame imaged and video-recorded under an exposure by the exposure signal generation means 18.

The frame association means 20 determines whether or not the current time generated by the current time generation means 17 has reached the trigger time acquired from the trigger time reception means 19, sets, when it is determined that the current time has reached the trigger time, an image frame in the case as an image frame at the trigger time, transmits the trigger signal to the video recording unit 6 and sets a predetermined image frame based on the image frame at the trigger time, and makes the predetermined image frames match one another in the cameras 1, thereby synchronizing the cameras 1 with one another.

Examples of the predetermined image frame based on the image frame at the trigger time include an image frame at the trigger time of each of the cameras 1. The cameras 1 may be synchronized with one another by making the image frames match one another.

Examples of the image frame at the trigger time include an image frame at a time slightly later than a current time at which a trigger signal is received and an image frame at a final video recording time at which video recording is finished.

Examples of the predetermined image frame based on the image frame at the trigger time include a predetermined image frame, which is set by providing the frame association means 20 in each of the cameras 1 with an image frame setting unit that sets an image frame having a predetermined relationship from the image frame at the set trigger time (e.g., an event frame at the time when a trigger signal is inputted when the image frame at the trigger time is an image frame at the time of final video recording), (e.g., the event frame in the above-described example). The cameras 1 may be synchronized with one another by making the image frames match one another.

### Description of Current Time Generation Means 17

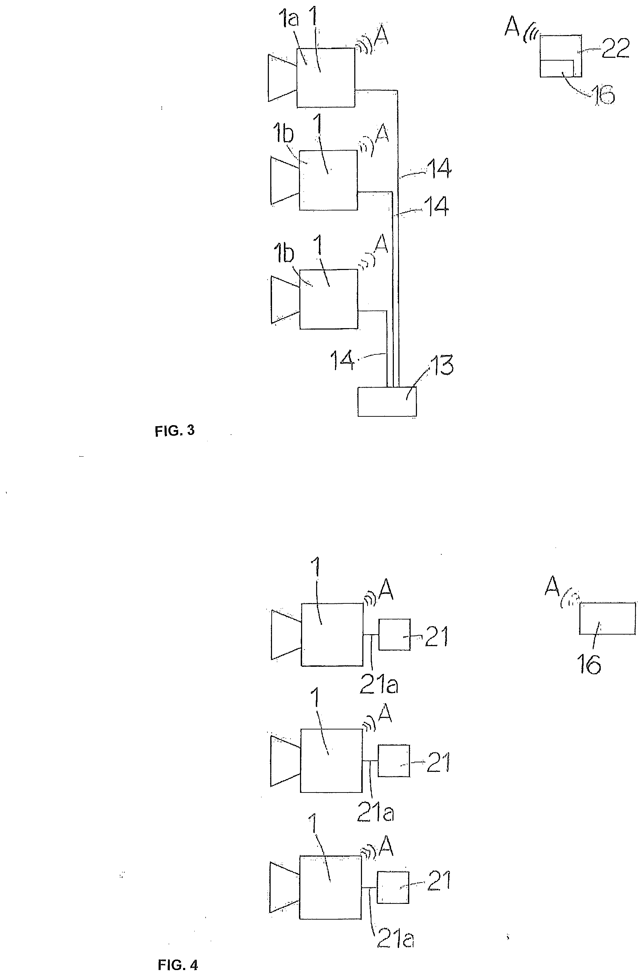

That is, for example, the time signal transmission device 13 that transmits a time signal (time code) and each of the cameras 1 are connected to each other via an electrical signal cable 14 represented by, for example, a BNC and a coaxial cable such that an electronic device is interposed therebetween as little as possible in communication means in order to reduce a transmission delay, as illustrated in FIG. 3. The system control unit 7 in each of the cameras 1 regularly receives a time signal, which has a low resolution but is highly accurate, from the time signal transmission device 13 via the electrical signal cable 14.

For example, the one camera 1 (parent camera 1a) and the time signal transmission device 13 may be connected to each other via the electrical signal cable 14 such that no electronic device is interposed therebetween, and the time signal transmission device 13 may be connected to each of the other cameras 1 (child cameras 1b) by distributing the electrical signal cable 14 using a signal distributor.

Then, each of the cameras 1 is synchronized with the time signal, and the current time generation means 17 generates a current time. As a result, each of the cameras 1 is synchronized with the current time.

The current time generation means 17 sets a time period between timings (e.g., one second) during which a time signal is regularly received. For example, a phase locked loop (PLL), for example, provided in the current time generation means 17 equally divides (e.g., divides into 1000 equal parts) the time period between the timings (e.g., one second), as illustrated in FIG. 2. This makes it possible to generate a highly accurate time with a high resolution.

Examples of a general standard of a time code for synchronizing a plurality of devices with one another include an IRIG-B and an LTC. The time code does not have a frame rate that satisfies high-speed shooting. On the other hand, a phase shift tends to be small, that is, a synchronization accuracy among the devices tends to be high.

For example, in addition to connecting each of the cameras 1 and the time signal transmission device 13 to each other directly via the electrical signal cable 14, as illustrated in FIG. 3, a wireless time synchronization device 21 is connected to each of the cameras 1 via an electrical signal cable 21a represented by, for example, a BNC and a coaxial cable such that an electronic device is interposed therebetween as little as possible in order to reduce a transmission delay in communication means, as illustrated in FIG. 4. The wireless time synchronization devices 21 are wirelessly synchronized with one another. The cameras 1 may be synchronized with one another such that a time signal (time code) is transmitted from each of the wireless time synchronization devices 21 that are wirelessly synchronized with one another to the corresponding camera 1.

### Description of Exposure Signal Generation Means 18

Then, an exposure signal is generated at an exposure timing at the equal intervals (e.g., intervals of one millisecond) based on the above-described current time by the exposure signal generation means 18, and images are sequentially shot by the exposure signal so that high-speed shooting is implemented.

A timing (cycle) of the exposure signal is set to a predetermined time period. If one second is divided into 1000 equal parts, for example, the timing is set to intervals of one millisecond. When the exposure signal is generated at the intervals of one millisecond, an imager unit 4 performs imaging by an exposure so that each of image frames in the cycle is generated. An exposure time period may be set shorter than the cycle in addition to being set to a time period that is considered to be the same as the cycle.

When each of the cameras 1 performs an exposure at a predetermined exposure timing (cycle) to match the current time, the respective image frames of the cameras 1 are synchronized with one another.

Examples of a case where the respective image frames of the cameras 1 are synchronized with one another include a case where exposures are respectively performed at the predetermined exposure timings to match synchronized time axes of the cameras 1 and boundaries of the image frame (i.e., a start time and an end time of the image frame) are set with an exposure start time or an exposure end time of the exposure used as a reference, to make the respective boundaries of the image frames (i.e., the start times or end times of the image frames) of the cameras 1 match one another.

### Description of Trigger Time Reception Means 19

Then, for example, a trigger time generated by the trigger time setting means 16 described below is transmitted (A) by trigger time transmission means, for example, in a communication format based on a TCP/IP protocol such as a wireless communication format, and is received (A) by the trigger time reception means 19 in each of the cameras 1, as illustrated in FIGs. 1 and 3.

**In** the drawings, "A" indicates communication of a trigger time.

FIG. 3 illustrates an example in which a device 22 composed of, for example, a separate tablet, which differs from each of the cameras 1 is provided with the trigger time setting means 16.

In this example, the device 22 that has received a trigger signal from a trigger generator generates the above-described trigger time by the trigger time setting means 16, and the generated trigger time is transmitted (A) to each of the cameras 1 and is received (A) by the trigger time reception means 19 in the camera 1.

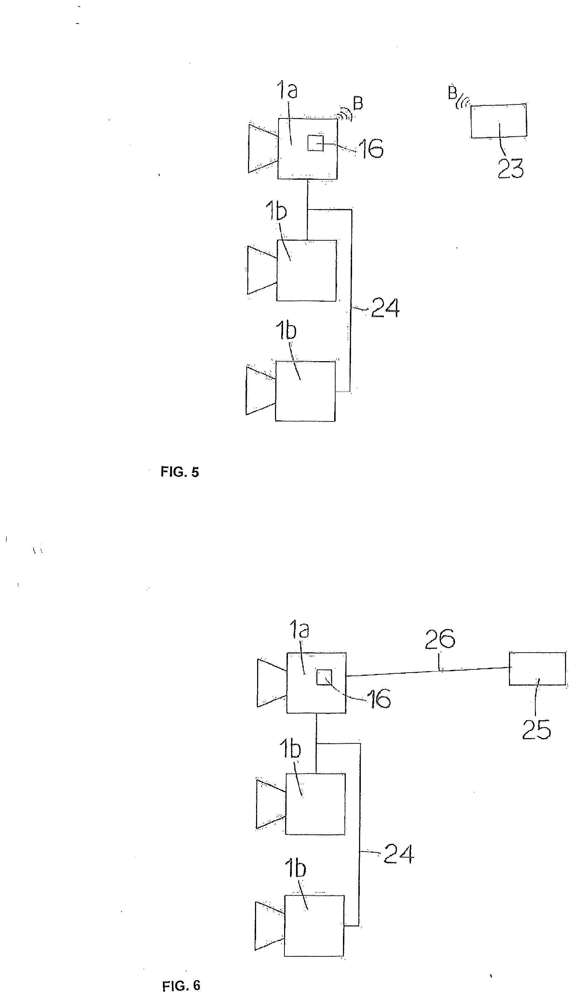

FIG. 5 illustrates another method for transmitting a trigger time to each of cameras 1. In FIG. 5, time synchronization means is omitted.

FIG. 5 illustrates an example in which the system control unit 7 in the one camera 1 (parent camera 1a) includes the trigger time setting means 16.

In this example, a trigger generator 23, for example, which generates a trigger signal using a control device such as a remote controller is operated, to generate a trigger signal. The trigger signal is transmitted (B) to the trigger time setting means 16 in the parent camera 1a by transmission means in a communication format based on a TCP/IP protocol provided in the trigger generator 23.

In the drawings, "B" indicates communication of a trigger signal.

The trigger time setting means 16 that has received (B) the trigger signal generates a trigger time. The trigger time generated by the trigger time setting means 16 may be notified to the trigger time reception means 19 (in this case, some of functions of the frame association means 20 may constitute the trigger time reception means 19) in the one camera 1 (parent camera 1a) and transmitted to the other camera 1 (child camera 1b) by wire 24 or wirelessly by the trigger time transmission means.

The wire 24 includes both an electrical signal cable and a communication cable. Examples of the communication cable include a network cable, a LAN cable, and a serial cable.

The trigger time setting means 16 may be provided in a plurality of cameras 1 other than the one camera 1a.

Instead of connecting the parent camera 1a and the trigger generator 23 to each other by the transmission means in the communication format based on the TCP/IP protocol, a trigger generator 25 that generates a trigger signal using an electrical signal input unit and the parent camera 1a may be connected to each other via an electrical signal cable 26 such as a BNC cable without an electronic device being interposed therebetween, as illustrated in FIG. 6.

In such a case, the time when the trigger generator 25 is operated and the time when the parent camera 1a receives a trigger signal can be synchronized with each other.

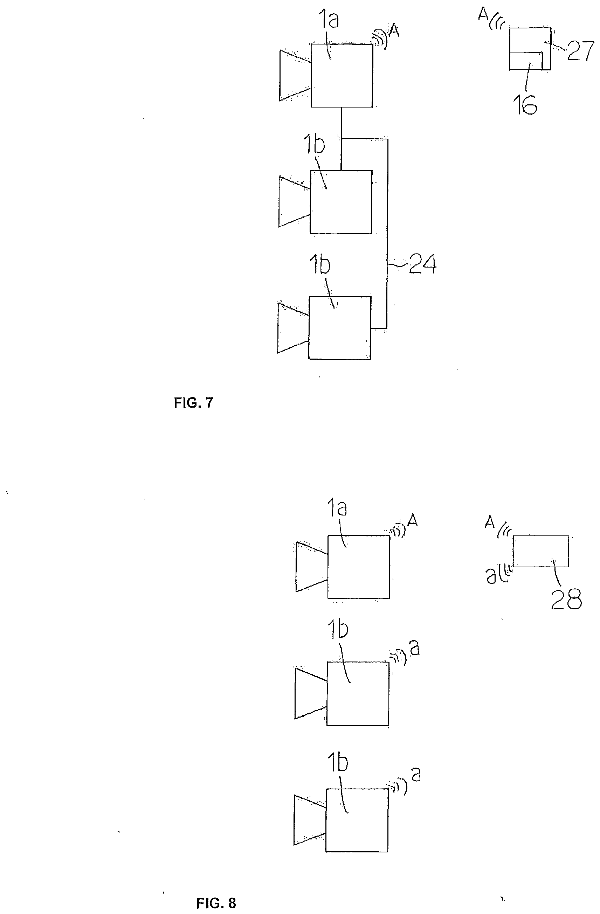

FIG. 7 illustrates another method for transmitting a trigger time to each of cameras. In FIG. 7, time synchronization means is omitted.

Although the example illustrated in FIG. 6 is an example in which the parent camera 1a includes the trigger time setting means 16, the trigger time setting means 16 may be provided in a device 27 separate from the parent camera 1a so that the parent camera 1a transmits a trigger time received (A) from the separate device 27 to the child camera 1b by wire 24 or wirelessly in an example illustrated in FIG. 7.

FIG. 8 illustrates still another method for transmitting a trigger time to each of cameras. In FIG. 8, time synchronization means is omitted.

As illustrated in FIG. 8, the one camera 1 (parent camera 1a) may separately transmit (A) a received or generated trigger time to a device 28 such as a tablet by wire or wirelessly, and the device 28 may transmit (a) the trigger time to trigger time reception means 19 in the other camera 1 (child camera 1b) by wire or wirelessly.

In the drawings, "a" indicates communication of a trigger time between the device 28 and the child camera 1b.

The child camera 1b that has received the trigger time from the parent camera 1a may transmit the trigger time to the other camera 1 (child camera 1b) by wire or wirelessly, similarly to the above, as a parent camera 1a.

The parent camera 1a or the child camera 1b and the other camera may be connected to each other via an electrical signal cable so that a trigger signal is notified therebetween.

The cameras and the trigger time setting means 16 may be connected to each other by changing a combination in the above-described example.

A case where the trigger time setting means 16 is a device separate from each of high-speed cameras 1 in principle will be described below. However, the same applies to a case where the trigger time setting means 16 is provided in one or a plurality of cameras.

### Description of Frame Association Means 20

The frame association means 20 in each of the cameras 1 determines whether or not a current time acquired from the current time generation means 17 has reached a trigger time acquired from the trigger time reception means 19, sets, when it is determined that the current time has reached the trigger time, an image frame in the case as an image frame at the trigger time, i.e., a trigger frame and sets a predetermined image frame based on the image frame at the trigger time, and makes the predetermined image frames match one another in the cameras 1, thereby synchronizing the cameras 1 with one another.

### Description of Trigger Time Setting Means 16

The trigger time setting means 16 is provided in, for example, a device separate from the high-speed cameras 1 or one or a plurality of high-speed cameras 1.

The trigger time setting means 16 includes, for example, a timer, a trigger signal input unit, a trigger time generation means for generating a trigger time, and trigger time transmission means.

The trigger signal input unit receives, from a trigger generator that generates a trigger signal, the trigger signal.

The trigger generator generates the trigger signal when the electrical signal input unit or a trigger button of the remote controller, for example, is operated. The trigger signal is transmitted to the trigger signal input unit by wire or wirelessly.

The trigger generator may be provided in the trigger time setting means 16 or may be provided as a separate device.

The trigger signal is inputted into the trigger signal input unit, to generate a trigger time under predetermined conditions described below on the basis of a current time at which the trigger signal has been inputted by the trigger time generation means.

If the trigger time setting means 16 is a device separate from the cameras 1, the timer may be synchronized with a time of the time signal transmission device 13 or each of the cameras 1 wirelessly or by wire.

If the trigger time setting means 16 is a separate member, the trigger time setting means 16 may be provided with the current time generation means 17 provided in the camera 1 to generate a current time.

### Specific Example

Then, setting of a trigger time and an example of the frame association means will be described.

### Description of Corrected Trigger Time

In a case where the acquired trigger time and image frames are made to match each other, when the trigger time is a boundary of each of the image frames, i.e., a start time or an end time of the image frame, the image frame can also be set as an image frame at the trigger time (hereinafter referred to as a "trigger frame"). However, when the trigger time and the start time or the end time of each of the image frames are shifted from each other due to an error in accuracy of the timer in each of the cameras 1 so that the image frame preceding or succeeding the image frame by one image frame may be recognized as a trigger frame. Therefore, the respective image frames of the cameras 1 may be desynchronized with one another.

In order to eliminate an influence of an error in time accuracy of each of the cameras 1, a trigger time correction unit, for example, may be provided, to use a corrected trigger time set, as a trigger time, to a time later than a start time and earlier than an end time of an image frame, i.e., to be farther away from respective boundaries at a start time and an end time of the image frame.

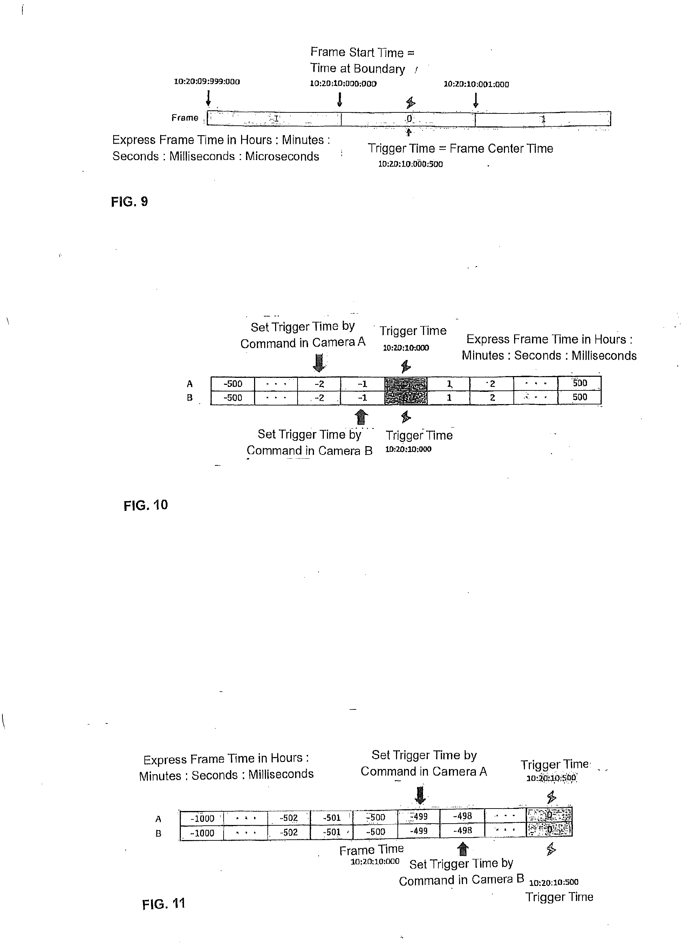

For example, when a start time of an image frame to be a trigger time is 10 : 20 : 10 : 000 : 000 (hours : minutes : seconds : milliseconds : microseconds) and an end time of the image frame is 10 : 20 : 10 : 001 : 000, as illustrated in FIG. 9, the trigger time is not set to 10 : 20 : 10 : 000 : 000 but set to an intermediate time 10 : 20 : 10 : 000 : 500 of the image frame.

The corrected trigger time as the intermediate time, for example, is thus used, thereby ensuring synchronization among the cameras 1.

The trigger time setting unit 16 may be provided with the trigger time correction unit so that the trigger time is corrected when transmitted from the trigger time setting means 16. Alternatively, each of the cameras 1 may be provided with the trigger time correction unit so that the trigger time is corrected by the camera 1 when received by the camera 1.

If respective video recording speeds of the cameras 1 differ from one another and respective start times and end times of the trigger frames of the cameras 1 respectively differ from one another, as described below, the trigger time correction unit sets a corrected trigger time to be a time between the start time and the end time of the trigger frame of each of the cameras 1.

Hereinafter, a trigger time is a concept including a corrected trigger time.

### Trigger Time Setting Method 1

A method 1 is to perform setting to generate, when receiving a trigger signal in the trigger time generation means for generating a trigger time in the trigger time setting means 16, a trigger time slightly later than the time and transmit the set trigger time to the trigger time reception means 19 in each of the cameras 1.

The above-mentioned slightly later time is, for example, a time later by a time period corresponding to 10 image frames. If respective video recording speeds (one divided by cycles) of the cameras 1 differ from one another, the respective numbers of image frames until the slightly later times match one another in the cameras 1 differ from one another. For example, a time later by a time period corresponding to 10 image frames in any one of the cameras 1 is set.

The frame association means 20 sets the image frame at the trigger time as a trigger frame, and makes the respective trigger frames of all the cameras 1 match one another.

That is, in this method 1, all the cameras 1 each receive the trigger time from the trigger time setting means 16 and set the trigger time to a time slightly later than a current time in consideration of a period elapsed until setting of the trigger time is completed.

Thus, after all the cameras 1 each receive the trigger time, a time of each of the cameras 1 can pass through the trigger time, thereby making it possible to make the respective trigger frames of the cameras 1 match one another.

FIG. 10 illustrates an example of the method 1 in two cameras (A and B) each operating at a video recording speed of 1000 fps, for example. The trigger time setting means 16 receives a trigger signal from the outside and transmits as a command a trigger time, e.g., 10 : 20 : 10 : 000 (hours : minutes : seconds : milliseconds) as a time later than a current time at which the trigger signal has been received (a corrected trigger time is 10 : 20 : 10 : 000 : 500 (hours : minutes : seconds : milliseconds : microseconds) that is an intermediate time of an image frame; the corrected trigger time is hereinafter omitted).

The above-described command means instruction data used for camera control. The command may include trigger signal data and may further include trigger time data in order to transmit a trigger time. The command may also be included in communication based on a TCP/IP protocol.

The camera A receives the command as the trigger time at, for example, a time in an image frame (- 2) before the above-described trigger time, and the camera B receives the command as the trigger time at a time in an image frame (- 1) before the trigger time. In the cameras A and B, the trigger times are respectively set by the commands. As a result, even if there is a difference in command reception time between the cameras A and B, the cameras 1 can be respectively set as trigger frames in time for the trigger times. Accordingly, the respective trigger frames of the cameras A and B can be made to match each other.

Even if a trigger time is later than a current time, it is not ensured that the trigger time has been set in all the cameras 1. Accordingly, a trigger frame may be shifted in the camera 1 that has been too late to set the trigger time.

In the method 1, an image frame (event frame) at the time when trigger input has been performed and a trigger frame at a trigger time may be shifted by a small number of image frames.

### Trigger Time Setting Method 2

A method 2 is to calculate, when receiving a trigger signal, for example, in trigger time generation means for generating a trigger time in the trigger time setting means 16, a time in an image frame at the end of video recording previously set in each of the cameras 1 from the time, perform setting to generate a trigger time from the calculated time, and transmit as a command the set trigger time to the trigger time reception means 19 in the camera 1.

This method 2 is an example in which a video recording time period (a cycle × the number of image frames) after an event frame is common among all the cameras 1. Here, a cycle (exposure timing) is set to one divided by a video recording speed. The number of image frames means the number of image frames from the event frame to the image frame at the end of video recording.

That is, the method 2 is an example in which all the cameras 1 are the same in the video recording speed (or the exposure timing; the same applies hereinafter) and the number of image frames.

If all the cameras 1 differ in the video recording speed and the number of image frames and differ in the video recording time period after the event frame, a method 3 described below is used.

In this method 2, the frame association means 20 sets the image frame at the trigger time as a predetermined image frame. As a result, respective image frames at the end of video recording of all the cameras 1 match one another.

That is, in this method 2, the trigger time is made to match not the event frame but the image frame at the end of video recording, to make the respective image frames of all the cameras 1 match one another.

In the method 2, for example, when the trigger time has been reached in a video-recorded image frame number setting unit in the video recording unit 6, video recording of the memory 5 is stopped and a required number of image frames are video-recorded. For example, in an example of two cameras (A and B) each operating at a video recording speed of 1000 fps, as illustrated in FIG. 11, the number of image frames after triggering (excluding a trigger frame) is set to zero, and the number of image frames before triggering is set to store only a required number of image frames (e.g., when 500 image frames and 500 image frames respectively preceding and succeeding the event frame are recorded, a total number of image frames, i.e., 1001 image frames including the event frame and the image frames respectively preceding and succeeding the event frame).

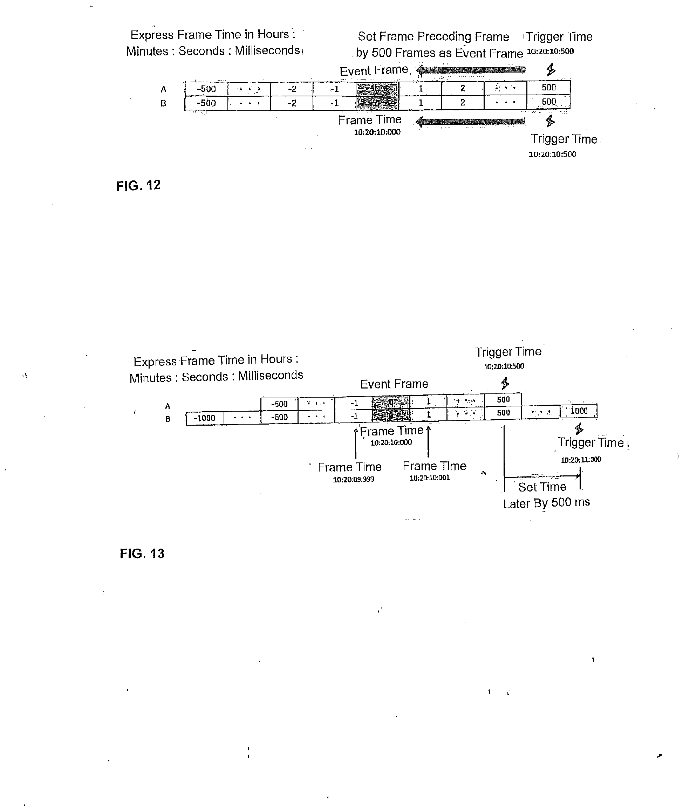

Further, for example, in an example of two cameras (A, B) each operating at a video recording speed of 1000 fps, as illustrated in FIG. 12, the frame association means 20 may synchronize the cameras 1 with one another by setting an image frame at the end of video recording as a trigger frame, as described above, then calculating an event frame at the time when an original trigger signal is inputted by further preceding the image frame at the end of video recording using the image frame setting unit provided in the image frame association means 20, setting the event frame as a predetermined image frame, and making the respective predetermined image frames of the cameras match one another.

As described above, the trigger time is set as an image frame at the end of video recording to synchronize the cameras 1 with one another, thereby making it possible to maximize a period allowed until the setting of the trigger time in all the cameras 1 is completed and making it possible to reduce the number of cameras 1 that are too late to set the trigger time.

### Method 3 Using Frame Association Means

The method 2 assumes, when respective video recording time periods after event frames of the cameras 1 are the same, that image frames at the end of video recording are made to match one another, as described above. The method 2 is an example in which trigger times respectively transmitted to cameras 1 are the same.

However, a method 3 is a method assuming both a case where respective video recording time periods after event frames of the cameras 1 are the same and a case where they differ from one another. This method 3 is to calculate a time in an image frame at the end of video recording previously set for each of the cameras 1 and perform setting to generate a trigger time from the calculated time for each of the cameras 1 in the trigger time setting means 16 such that respective event frames (e.g., image frames at the time when a trigger signal is transmitted) of the cameras 1 match one another. The trigger time set for each of the cameras 1 is transmitted to the trigger time reception means 19 in the camera 1, the event frame is calculated from the image frame at the end of video recording using the image frame setting unit in the frame association means 20 in the camera 1, and the respective calculated event frames of the cameras 1 are made to math one another, thereby synchronizing the cameras 1 with one another.

FIG. 13 illustrates a method for making respective event frames of the cameras 1 match one another when the video recording speeds thereof are the same but the respective numbers of image frames thereof differ from one another. The method will be described below.

As illustrated in FIG. 13, in two cameras (A, B) each operating at a video recording speed of 1000 fps, the camera A can video-record 1001 image frames and can record an event frame and 500 image frames and 500 image frames respectively preceding and succeeding the event frame. When the camera B can video-record 2001 image frames and video-records an event frame and 1000 image frames and 1000 image frames respectively preceding and succeeding the event frame, the camera B sets a time later by 500 milliseconds than the camera A as a trigger time, and sets an image frame at the end of video recording as a trigger frame. Then, the image frame setting unit sets the image frame preceding the image frame at the end of video recording by 500 image frames as an event frame in the camera A and sets the image frame preceding the image frame at the end of video recording by 1000 image frames as an event frame in the camera B. Respective timings of the event frames match each other in both the cameras, thereby synthesizing the cameras A and B with each other.

**In** the method 3, the event frames of the cameras 1 can be synchronized with one another even if the respective numbers of image frames of the cameras 1 differ from one another.

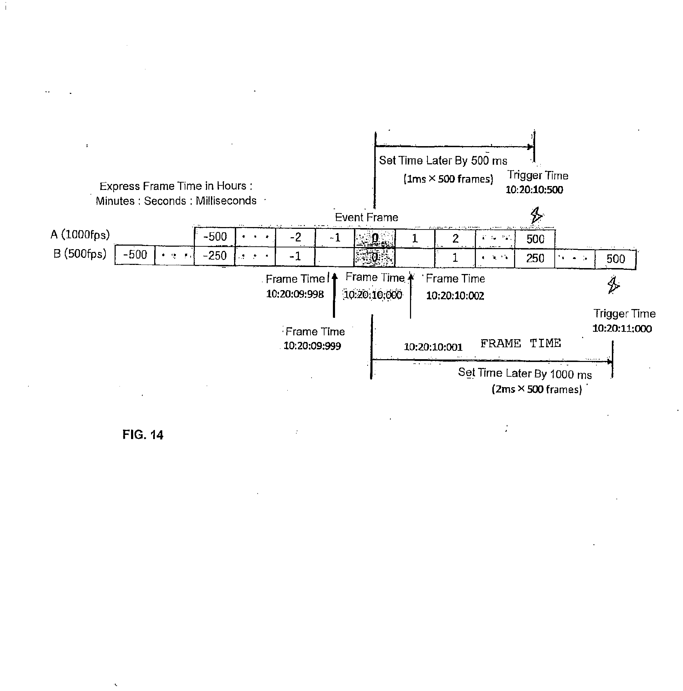

FIG. 14 illustrates a method for making event frames of the cameras match each other when the respective numbers of image frames of the cameras are the same but the respective video recording speeds thereof differ from each other. The method will be described below.

As illustrated in FIG. 14, in two cameras (A and B), i.e., a camera A operating at a video recording speed of 1000 fps and a camera B operating at a video recording speed of 500 fps, the camera A and the camera B can each record 1001 image frames and can each record an event frame and 500 image frames and 500 image frames respectively preceding and succeeding the event frame.

Since an image frame at the end of video recording in the camera A is later by 500 milliseconds (1 ms × 500 image frames) than the event frame, a time later by 500 milliseconds than a time in the event frame is set as a trigger time in the camera A. Since an image frame at the end of video recording in the camera B is later by 1000 milliseconds (2 ms × 500 image frames) than the event frame, a time later by 1000 milliseconds than a time in the event frame is set as a trigger time in the camera B. After the image frame at the end of video recording of each of the cameras A and B is set as a trigger frame, the image frame setting unit sets the image frame preceding the trigger frame by 500 image frames as an event frame in each of the cameras A and B, and sets respective timings of the event frames to match each other in both the cameras A and B, thereby synthesizing the cameras A and B with each other.

In cameras, if their respective video recording speeds differ from one another and start times and end times of their respective trigger frames respectively differ from one another, a corrected trigger time is set to a time between the start time and the end time of the trigger frame of each of the cameras.

For example, in cameras in which respective boundaries of their image frames are set to match an exposure start time and the image frames are synchronized with one another by making respective start times of the image frames match one another, if respective video recording speeds differ from one another and respective exposure time periods are the same, corrected trigger times are preferably set, when the video recording speeds of the cameras are in a relationship of integral multiples of one another, to a time slightly later than the start time of the image frame of the camera having the lowest video recording speed as a reference.

A time period until the above-described slightly later time means a time period longer than zero and shorter than a time period from the start time to an end time of the image frame of the camera having the highest video recording speed. The time period is, for example, half of a time period from the start time to the end time of the image frame of the camera having the highest video recording speed.

For example, if there are three types of cameras respectively having video recording speeds of 500 fps, 1000 fps, and 2000 fps, a time later by half (250 microseconds) of a frame cycle of the camera having the highest video recording speed of 2000 fps than a start time of the camera having the recording speed of 500 fps (a cycle of 2 milliseconds) as a reference may be set as a corrected trigger time.

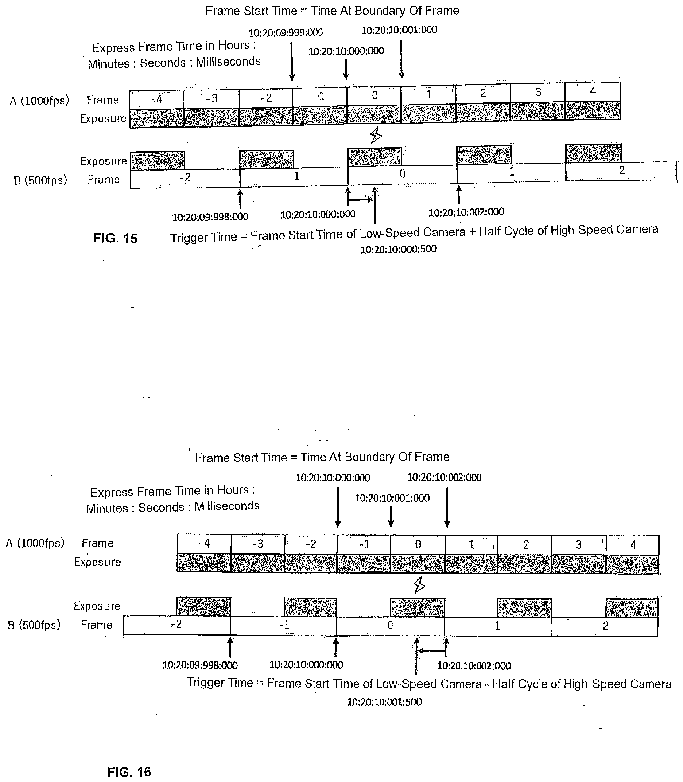

For example, consider a case where an exposure time period of each of the cameras is set to one millisecond, as illustrated in FIG. 15. In two cameras (A, B), i.e., a camera A operating at a video recording speed of 1000 fps and a camera B operating at a video recording speed of 500 fps, a corrected trigger time is set, when, with respective boundaries (10 : 20 : 09 : 998 : 000), (10 : 20 : 10 : 000 : 000), and (10 : 20 : 10 : 002 : 000) of image frames of the camera B having the lower video recording speed used as a reference, a time in the image frame succeeding the image frame at the time when a trigger signal is inputted, i.e., a start time of the image frame to be an event frame among the image frames is (10 : 20 : 10 : 000 : 000), to a time (10 : 20 : 10 : 000 : 500) obtained by adding only a half cycle of each of the image frames (10 : 20 : 09 : 999 : 000), (10 : 20 : 10 : 000 : 000), and (10 : 20 : 10 : 001 : 000) of the camera A having the higher video recording speed to the start time. This makes it possible to set an image frame that is common among all the cameras as a trigger frame while eliminating an influence of an error in time accuracy of each of the cameras.

For example, consider a case where respective exposure times of cameras set such that boundaries of image frames match an exposure end time and end times of the image frames are made to match one another so that the image frames are synchronized with one another are each set to one millisecond, as illustrated in FIG. 16. **In** two cameras (A, B), i.e., a camera A operating at a video recording speed of 1000 fps and a camera B operating at a video recording speed of 500 fps, a corrected trigger time is set, when, with respective boundaries (10 : 20 : 09 : 998 : 000), (10 : 20 : 10 : 000 : 000), and (10 : 20 : 10 : 002 : 000) of image frames of the camera B having the lower video recording speed used as a reference, a time in the image frame preceding the image frame at the time when a trigger signal is inputted, i.e., an end time of the image frame to be an event frame among the image frames is (10 : 20 : 10 : 000 : 000), to a time (10 : 20 : 10 : 000 : 500) obtained by subtracting only a half cycle of each of the image frames (10 : 20 : 09 : 999 : 000), (10 : 20 : 10 : 000 : 000), and (10 : 20 : 10 : 001 : 000) of the camera A having the higher video recording speed from the end time. This makes it possible to set an image frame that is common among all the cameras as a trigger frame while eliminating an influence of an error in time accuracy of each of the cameras.

### Comparison between Conventional Method and Method According to Invention

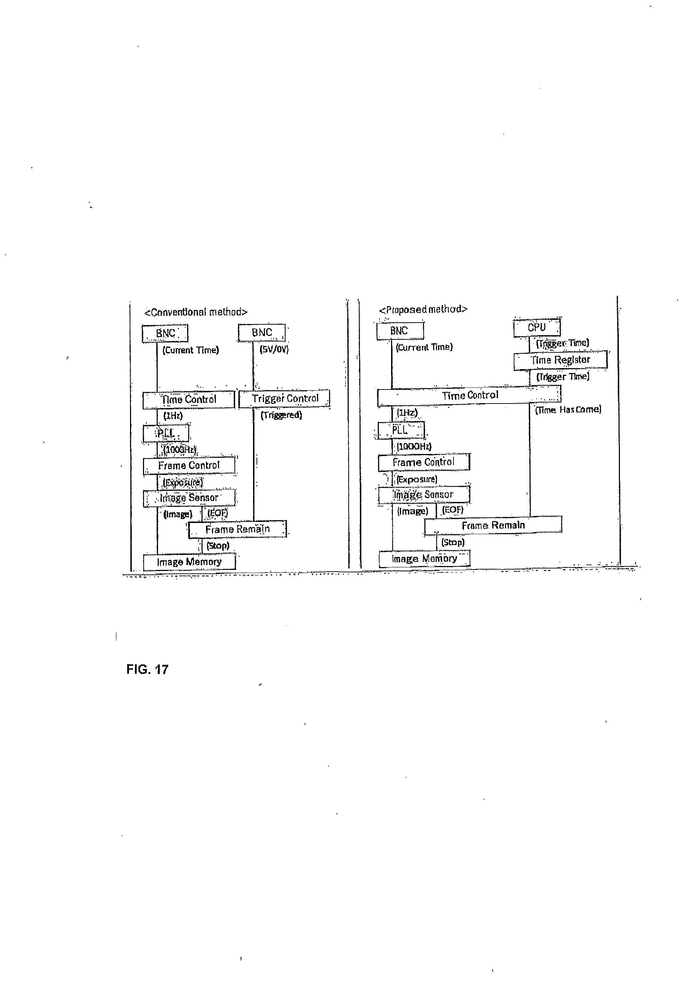

FIG. 17 illustrates and describes a comparison between respective flows of a conventional method and a new method.

This example is an example in which one camera is provided with the above-described trigger time setting means.

As illustrated in FIG. 17, in the conventional method and the new method, respective methods for controlling exposure timings by time signals are the same.

That is, a current time signal is inputted from a BNC connector, and a 1 Hz signal is generated by a time control unit in the current time generation means 17. A signal (hereinafter referred to as a VD signal; e.g., 1000 Hz in FIG. 2) obtained by equally dividing the generated 1 Hz signal into frequencies of video recording speeds is generated by a phase locked loop (PLL) in the exposure signal generation means 18, and an exposure start signal generated by a frame control unit in the exposure signal generation means 18 from the VD signal is inputted into an image sensor (the imager unit 4). Accordingly, video recording is performed at a predetermined exposure timing, and image data is read out from the image sensor and is recorded in an image memory unit (the video recording memory 5) in a ring buffer shape.

Image frames to be recorded are managed such that the video recording is stopped when a trigger time is inputted into a frame remain unit (the video recording unit 6) and the specified numbers of image frames respectively preceding and succeeding a trigger frame are recorded.

The conventional method and the new method differ in a method for generating a trigger time to be inputted into the frame remain unit (video recording unit 6).

In the conventional method, a trigger signal is inputted from the BNC connector via an electrical signal cable, the trigger signal is inputted into a trigger control unit, and the trigger signal is inputted into the frame remain unit (video recording unit 6). With this time as a reference, recording into the video recording memory is stopped under predetermined conditions.

In the new method, a trigger time for an event frame is generated by a CPU unit. With the trigger time used as a reference, a trigger time is regenerated such that respective event frames of a plurality of cameras are the same by a time register unit.

When the trigger time is inputted into the time control unit, a trigger signal is generated when the trigger time has been reached, and the trigger signal is inputted into the frame remain unit (video recording unit 6) so that respective trigger frames of the cameras can be synchronized with one another. Accordingly, the trigger signal need not be inputted by the BNC connector.

### Second Embodiment

### Description of Overall Configuration of Second Embodiment

A second embodiment will be described below. Units not particularly described are the same as those in the first embodiment, and descriptions thereof are omitted.

**In** the second embodiment of the present invention, the camera synchronization means in the first embodiment is composed of sequence number synchronization means, and the synchronization signal setting means for setting (generating) the synchronization signal and transmitting the synchronization signal to each of the required high-speed cameras 1 in the first embodiment is composed of sequence number matching time setting means and trigger sequence number transmission means.

The sequence number matching time setting means is configured to set (generate) a sequence number matching time at which a signal for setting a sequence number assigned to each of video-recorded image frames to a predetermined number is sequentially transmitted to high-speed cameras 1 and transmit the sequence number matching time to each of the required high-speed cameras 1.

The trigger sequence number transmission means is configured to generate and transmit a trigger sequence number corresponding to an image frame to which a trigger signal is to be transmitted.

That is, in the second embodiment of the present invention, respective time axes of timers of the high-speed cameras 1 are synchronized with one another, and respective image frames of the high-speed cameras 1 are synchronized with one another by performing exposures at predetermined exposure timings (cycles) to match the time axes. The sequence number matching time setting means transmits the same sequence number matching time to each of the high-speed cameras 1, and makes, when the high-speed camera 1 reaches the sequence number matching time, the sequence number of the image frame of the high-speed camera 1 match the set predetermined number so that the respective sequence numbers of the high-speed cameras 1 match one another. Then, the trigger sequence number transmission means transmits a trigger sequence number for transmitting the same trigger signal to each of the high-speed cameras 1, and transmits, when the sequence number of the high-speed camera 1 reaches the transmitted trigger sequence number, the trigger signal to a video recording unit in the high-speed camera 1, thereby synchronizing the respective image frames of the high-speed cameras 1 with one another.

There are various patterns such as a case where the sequence number matching time setting means and the trigger sequence number transmission means are respectively provided in different devices, a case where they are provided in the same device, and a case where they are respectively provided in the high-speed cameras 1.

### Description of Sequence Number Synchronization Means

The sequence number synchronization means includes a sequence number setting unit that sequentially numbers an image frame sequentially recorded in a video recording memory in a ring buffer shape at a set predetermined exposure timing, current time generation means 17 for synchronizing a timer of the system control unit 7 with a current time signal (time code) transmitted at a regular low-resolution timing from outside a time signal transmission device 13 or the like other than each of the high-speed cameras 1, further dividing a predetermined time period at equal intervals on the basis of the current time signal, and generating a high-resolution current time, exposure signal generation means 18 for generating an exposure signal for imaging an image according to an exposure timing set on the basis of the current time obtained by the division at the equal intervals by the current time generation means 17, sequence number matching time reception means for receiving the sequence number matching time, trigger sequence number reception means for receiving the trigger sequence number, and frame association means 20 for associating a synchronization signal including the sequence number matching time received by the sequence number matching time reception means and the trigger sequence number received by the trigger sequence number reception means with a predetermined image frame imaged and video-recorded under an exposure by the exposure signal generation means 18.

The frame association means 20 first determines whether or not the current time generated by the current time generation means 17 has reached the sequence number matching time acquired from the sequence number matching time reception means, and sets, when it is determined that the current time has reached the sequence number matching time, a sequence number of each of the high-speed cameras 1 to a predetermined value, for example, sets the sequence number to zero (resets the sequence number) using a sequence number matching unit such as a reset unit that resets the sequence number, to make the respective sequence numbers of the high-speed cameras 1 match one another. The frame association means 20 sets, when the sequence number of each of the high-speed cameras 1 reaches the trigger sequence number received by the trigger sequence number reception means, an image frame in the case as an image frame in the trigger sequence number, transmits a trigger signal to the video recording unit 6, and makes the respective image frames in the trigger sequence numbers match one another, thereby synchronizing the high-speed cameras 1 with one another.

The sequence number matching time setting means and the trigger sequence number transmission means each have the same configuration and function as those of the trigger time setting means 16 in the first embodiment, and are connected to, for example, each of the cameras 1 by wire or wirelessly, like in the first embodiment.

The sequence number matching time reception means and the trigger sequence number reception means each have the same configuration and function as those of the trigger time reception means 19 in the first embodiment, and are connected to, for example, each of the cameras 1 by wire or wirelessly, like in the first embodiment.

If respective exposure timings (or video recording speeds) of the cameras 1 differ from one another, the respective sequence numbers at the same time of the cameras 1 are shifted from one another. However, the cameras 1 are respectively provided with sequence number correction units that consider the sequence numbers as the same sequence number at the same time. The sequence number correction units respectively correct the sequence numbers at the same time in the cameras 1 as being the same, thereby synchronizing the cameras 1 with one another.

In the cameras 1 respectively having different video recording speeds, for example, the sequence number correction units respectively set the sequence numbers assigned to the cameras 1 to be the same number at the same time.

That is, if there are two types of cameras respectively having video recording speeds of 1000 fps and 500 fps, for example, the sequence number correction units perform such setting, respectively, to add one to a sequence number, e.g., [00], [01], [02], and [03] in the camera having the video recording speed of 1000 fps (the shorter cycle) and to add two to a sequence number, e.g., [00],[02], [04], and [06] in the camera having the video recording speed of 500 fps (twice the shorter cycle). As a result, in the cameras, it is determined whether or not the respective sequence numbers have reached the same predetermined trigger sequence number.

As another method, the sequence number correction unit corrects a trigger sequence number for each of the cameras such that trigger signals are respectively generated at the same time in the cameras.

That is, in a case where there are two types of cameras respectively having video recording speeds of 1000 fps and 500 fps, for example, both of the cameras each adds one to a sequence number, e.g., [00], [01], [02], and [03]. The sequence number correction units perform such setting that when the trigger sequence number is <17> in the camera having the video recording speed of 1000 fps (the shorter cycle), it is <34> as a double value in the camera having the video recording speed of 500 fps (twice the shorter cycle). As a result, it is determined whether or not the sequence number has reached <17> in the camera having the video recording speed of 1000 fps, and it is determined whether or not the sequence number has reached <34> in the camera having the video recording speed of 500 fps.

### Specific Description of Frame Association Means

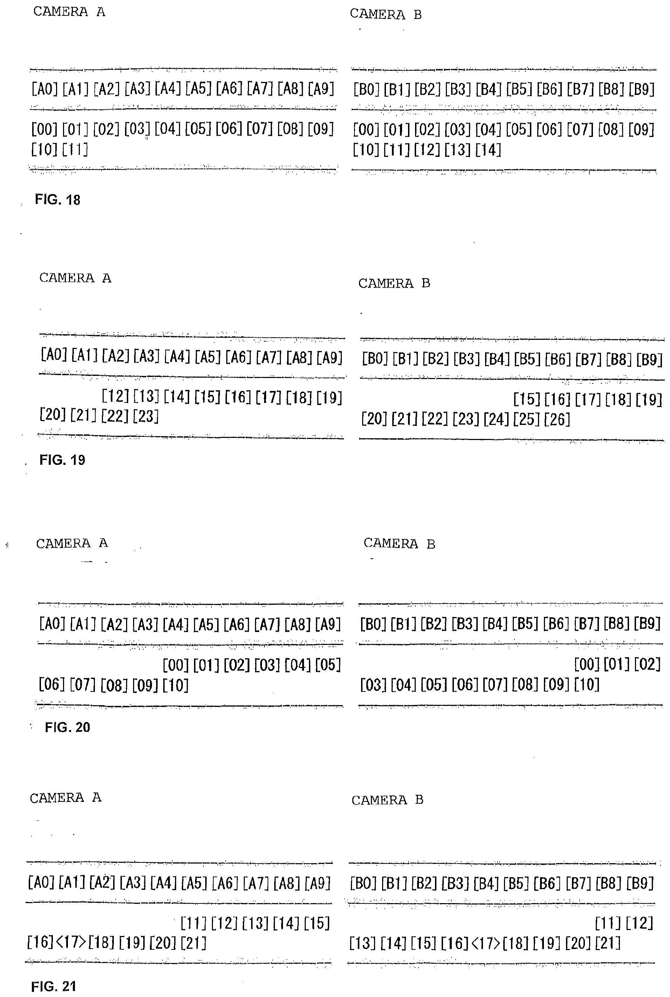

For example, video recording is started in setting in which image frames [A0] to [A9] on a physical region of a video recording memory of a camera A and image frames [B0] to [B9] on a physical region of a video recording memory of a camera B are each written in a ring buffer shape, and imaged image frames are sequentially written into each of the video recording memories, and are respectively assigned sequence numbers [00], [01], [02], ... to correspond to the sequentially video-recorded image frames by the sequence number setting unit, as illustrated in FIG. 18.

Assuming that times have already been synchronized with one another, FIG. 18 illustrates how the newest sequence numbers at the same time have not matched each other yet in the camera A and the camera B. That is, the respective new sequence numbers in the camera A and the camera B are [11] and [14], that is, are shifted by three image frames.

Here, the sequence number matching time setting means transmits an instruction (command) to indicate a sequence number matching time "10 : 20 : 10 : 000 : 500" such as a reset time at which a sequence number is reset to all high-speed cameras via Wi-Fi or the like, for example. Accordingly, when each of the high-speed cameras reaches the time (10 : 20 : 10 : 000 : 500), if the newest sequence number is [23] in the camera A and is [26] in the camera B, for example, as illustrated in FIG. 19, respective subsequent sequence numbers are each returned to [00] (reset) in the camera A and the camera B, and sequence numbers are then each sequentially assigned from [00], as illustrated in FIG. 20. As a result, the respective sequence numbers in the camera A and the camera B match each other so that video recording is continued.

Then, the sequence number transmission means transmits an instruction (command), for example, "set sequence number [17] as trigger frame" to all the high-speed cameras via Wi-Fi or the like. Accordingly, when a sequence number of an image frame of each of the high-speed cameras is 17, as illustrated in FIG. 21, a trigger signal is transmitted. As a result, video recording is stopped in a predetermined image frame, and required image frames (e.g., sequence numbers [12] to [21]) preceding and succeeding the image frame corresponding to the sequence number set by the video-recorded image frame number setting unit are left.

## Claims

1. A synchronous camera apparatus comprising a plurality of high-speed cameras, the synchronous camera apparatus comprising:
a plurality of high-speed cameras each including an imager unit that images a target video image by sequentially performing an exposure at a set exposure timing, a video recording memory, a video recording unit that video-records a predetermined image imaged by the imager unit as a predetermined image frame of digital data in the video recording memory by input of a trigger signal, and a system control unit that has a timer and performs various types of calculations; and
synchronization signal setting means for setting a synchronization signal in each of the high-speed cameras and transmitting the set synchronization signal to each of the high-speed cameras, wherein
the system control unit in each of the high-speed cameras includes camera synchronization means, and
the camera synchronization means includes
current time generation means for synchronizing, on the basis of a current time signal transmitted at a regular timing from the outside, the timer with the current time signal to generate a current time and determining the exposure timing on the basis of the current time,
synchronization signal reception means for receiving the synchronization signal from the synchronization signal setting means, and
frame association means for associating the synchronization signal received by the synchronization signal reception means with the predetermined image frame sequentially video-recorded.

2. The synchronous camera apparatus comprising the plurality of high-speed cameras according to claim 1, wherein
the synchronization signal setting means for setting a synchronization signal in each of the high-speed cameras and transmitting the set synchronization signal to each of the high-speed cameras is trigger time setting means for setting a trigger time at which a trigger signal is transmitted in the video recording unit in each of the high-speed cameras and transmitting the set trigger time to each of the high-speed cameras,
the camera synchronization means is trigger frame synchronization means, the synchronization signal reception means for receiving the synchronization signal from the synchronization signal setting means is trigger time reception means for receiving the trigger time from the trigger time setting means, and
the frame association means for associating the synchronization signal received by the synchronization signal reception means with the predetermined image frame sequentially video-recorded is means for associating the trigger time received by the trigger time reception means with the predetermined image frame sequentially recorded.

3. The synchronous camera apparatus comprising the plurality of high-speed cameras according to claim 2, wherein
the frame association means in each of the high-speed cameras is means for determining whether or not a current time of the image frame has reached the trigger time acquired from the trigger time reception means, setting, when it is determined that the current time has reached the trigger time, the image frame as an image frame at the trigger time, transmitting the trigger signal to the video recording unit and setting a predetermined image frame based on the image frame, and making the predetermined image frames match one another in the high-speed cameras, thereby synchronizing the high-speed cameras with one another.

4. The synchronous camera apparatus comprising the plurality of high-speed cameras according to claim 3, wherein
making the respective predetermined image frames based on the image frames match one another in the high-speed cameras,
to synchronize the high-speed cameras with one another means making the respective image frames at the trigger times of the high-speed cameras match one another as predetermined image frames,
or
to synchronize the high-speed cameras with one another means providing the frame association means in each of the high-speed cameras with an image frame setting unit that sets an image frame having a predetermined relationship from the image frame at the trigger time of the high-speed camera, to make the predetermined image frames respectively set by the image frame setting units in the high-speed cameras match one another.

5. The synchronous camera apparatus comprising the plurality of high-speed cameras according to claim 3, wherein the predetermined image frame is an event frame of an image frame at a time when the trigger signal is inputted into each of the high-speed cameras.

6. The synchronous camera apparatus comprising the plurality of high-speed cameras according to claim 2, wherein
the trigger time is set to a time later than a time when the trigger time setting means receives the trigger signal,
or
the trigger time is set to a time of an image frame at a time when video recording is finished.

7. The synchronous camera apparatus comprising the plurality of high-speed cameras according to claim 2, wherein
the trigger time is set to a time of an image frame at a time when video recording is finished, and
an image frame setting unit provided in the frame association means in each of the high-speed cameras calculates an event frame as an image frame at a time when a trigger signal is inputted from an image frame at the trigger time, and makes the respective event frames match one other in the high-speed cameras, thereby synchronizing the high-speed cameras with one another.

8. The synchronous camera apparatus comprising the plurality of high-speed cameras according to claim 2, wherein
the trigger times respectively inputted into the high-speed cameras match one another,
or
the trigger time of each of the cameras is set to correspond to an exposure timing set for the camera or/and a number of image frames, respective video records of which are left in a video recording memory.

9. The synchronous camera apparatus comprising the plurality of high-speed cameras according to claim 2, wherein the trigger time is set to a time later than a start time and earlier than an end time of the image frame, in which the trigger time is set, of each of the cameras.

10. The synchronous camera apparatus comprising the plurality of high-speed cameras according to claim 9, wherein in the high-speed cameras, respective set video recording speeds of which differ from one another and respective image frames of which are synchronized with one another by making start times of the image frames match one another, the trigger time is further set to be a time obtained by adding a time period longer than zero and shorter than a cycle (one divided by the video recording speed) of the high-speed camera having the highest video recording speed to the start time of the image frame of the high-speed camera having the lowest video recording speed in which the trigger time is set.

11. The synchronous camera apparatus comprising the plurality of high-speed cameras according to claim 9, wherein in the high-speed cameras, respective set video recording speeds of which differ from one another and respective image frames of which are synchronized with one another by making end times of the image frames match one another, the trigger time is further set to be a time obtained by subtracting a time period longer than zero and shorter than a cycle (one divided by the video recording speed) of the high-speed camera having the highest video recording speed from the end time of the image frame of the high-speed camera having the lowest video recording speed in which the trigger time is set.

12. The synchronous camera apparatus comprising the plurality of high-speed cameras according to claim 1, wherein the current time signals are respectively acquired from wireless time synchronization devices connected to the high-speed cameras via electrical signal cables without electronic devices being interposed thereamong and configured to be wirelessly synchronized with one another.

13. The synchronous camera apparatus comprising the plurality of high-speed cameras according to claim 1, wherein
the system control unit in each of the high-speed cameras includes a sequence number setting unit that sequentially numbers an image frame sequentially recorded in the video recording memory at a set predetermined exposure timing,
the synchronization signal setting means for setting a synchronization signal in each of the high-speed cameras and transmitting the set synchronization signal to each of the high-speed cameras includes
sequence number matching time setting means for setting (generating) a sequence number matching time for setting a sequence number of each of the high-speed cameras to a predetermined number and transmitting the sequence number matching time to each of the required high-speed cameras, and
trigger sequence number transmission means for generating and transmitting a trigger sequence number corresponding to an image frame to which a trigger signal is to be transmitted,
the camera synchronization means is sequence number synchronization means,
the synchronization signal reception means for receiving the synchronization signal from the synchronization signal setting means includes
sequence number matching time reception means for receiving the sequence number matching time from the sequence number matching time setting means, and
trigger sequence number reception means for receiving the trigger sequence number from the trigger sequence number transmission means, and
the frame association means for associating the synchronization signal received by the synchronization signal reception means with the predetermined image frame sequentially video-recorded includes
frame association means for associating a synchronization signal including the sequence number matching time received by the sequence number matching time reception means and the trigger sequence number received by the trigger sequence number reception means with a predetermined image frame imaged and video-recorded under an exposure by exposure signal generation means.

14. The synchronous camera apparatus comprising the plurality of high-speed cameras according to claim 13, wherein
the frame association means in each of the high-speed cameras is means for determining whether or not the current time generated by the current time generation means has reached the sequence number matching time acquired from the sequence number matching time reception means, setting, when it is determined that the current time has reached the sequence number matching time, the sequence number of each of the high-speed cameras to a predetermined value using the sequence number matching unit, to make the sequence numbers of the high-speed cameras match one another, setting, when the sequence number of each of the high-speed cameras reaches the trigger sequence number received by the trigger sequence number reception means, an image frame in the case as an image frame in the trigger sequence number, transmitting the trigger signal to the video recording unit, and making the image frames in the trigger sequence numbers of the high-speed cameras match one another, thereby synchronizing the high-speed cameras with one another.

15. The synchronous camera apparatus comprising the plurality of high-speed cameras according to claim 13 or 14, wherein
when the respective exposure timings of the high-speed cameras differ from one another, the high-speed cameras are respectively provided with sequence number correction units that correct the sequence numbers of the high-speed cameras to be the same at the same time.
